# EUROPÄISCHE PATENTSCHRIFT

(11) **EP 3 429 876 B1**
(45) Veröffentlichungstag und Bekanntmachung des Hinweises auf die Patenterteilung: **22.03.2023**
(21) Anmeldenummer: 17705913.6
(22) Anmeldetag: 22.02.2017
(51) Int. Cl.: B32B 17/10, B60J 3/04

(54) **WINDSCHUTZSCHEIBE MIT ELEKTRISCH REGELBARER SONNENBLENDE**
WINDSHIELD WITH ELECTRICALLY ADJUSTABLE SUN VISOR
PARE-BRISE A PARE-SOLEIL REGLABLE ELECTRIQUEMENT

(30) Priorität: 17.03.2016 EP 16160838
(43) Veröffentlichungstag der Anmeldung: 23.01.2019
(73) Patentinhaber: SAINT-GOBAIN GLASS FRANCE, 92400 Courbevoie (FR)
(72) Erfinder: LABROT, Michael, 52072 Aachen (DE); LINNHÖFER, Dieter, 52222 Stolberg (DE)
(74) Vertreter: Weber, Sophie
(86) Internationale Anmeldenummer: PCT/EP2017/054001
(87) Internationale Veröffentlichungsnummer: WO 2017/157626

(56) Entgegenhaltungen:
- WO-A1-2013/177676
- WO-A1-2014/200107
- WO-A1-2015/098312
- DE-A1-102011 003 256
- US-A- 4 749 261
- US-A1- 2014 192 286
- US-A1- 2015 331 296

## Beschreibung

Die Erfindung betrifft eine Windschutzscheibe mit elektrisch regelbarer Sonnenblende, ein Verfahren zu deren Herstellung und die Verwendung einer getönten thermoplastischen Schicht in einer solchen Windschutzscheibe.

Zum Blendschutz des Fahrers oder weiterer Insassen verfügen herkömmliche Kraftfahrzeuge über mechanische Sonnenblenden. Diese sind klappbar am Fahrzeugdach montiert und lassen sich bei Bedarf herunterschwenken, um das Blenden des Fahrers oder Beifahrers beispielsweise durch eine tief stehende Sonne zu verhindern oder zumindest abzuschwächen.

Es sind auch Windschutzscheiben bekannt, in die eine Sonnenblende in Form eines Funktionselements mit elektrisch regelbaren optischen Eigenschaften integriert sind, insbesondere mit elektrisch regelbarer Transmission oder Streuverhalten. Damit kann der Fahrer das Transmissionsverhalten der Windschutzscheibe selbst gegenüber Sonnenstrahlung steuern, die herkömmliche mechanische Sonnenblende wird verzichtbar. Dadurch kann das Gewicht des Fahrzeugs reduziert werden und es wird Platz im Dachbereich gewonnen. Zudem ist das elektrische Regeln der Sonnenblende für den Fahrer komfortabler als das manuelle Herunterklappen der mechanischen Sonnenblende.

Windschutzscheiben mit elektrisch regelbaren Sonnenblenden sind beispielsweise bekannt aus DE 102011003256 A1,

DE 102013001334 A1, DE 102005049081 B3, DE 102005007427 A1 und DE 102007027296 A1.

Ein mögliches regelbares Funktionselement zur Realisierung der regelbaren Sonnenblende ist ein sogenanntes PDLC-Funktionselement (*polymer dispersed liquid crystal*). Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch Herabsetzung des Gesamttransmission, sondern durch Erhöhung der Streuung, um den Blendschutz zu gewährleisten.

PDLC-Funktionselemente weisen im spannungsfreien Zustand ein weißes, milchiges Aussehen auf, welches häufig als nicht ästhetisch angesehen wird. Daher werden solche regelbaren Sonnenblenden von der Fahrzeugindustrie und dem Endkunden schwer akzeptiert.

US 4,749,261 A offenbart eine Fahrzeug-Verbundscheibe mit einem darin einlaminierten elektrisch regelbaren Funktionselement, welches eine getönte oder gefärbte Flächenelektrode aufweisen kann. Das Funktionselement kann dadurch verdeckt werden, jedoch sind der gestalterischen Freiheit enge Grenzen gesetzt, weil die Tönung auf das eigentliche Funktionselements beschränkt ist.

US 2014/192286 A1 offenbart eine Verbundscheibe mit einem darin einlaminierten elektrisch regelbaren Funktionselement. Die thermoplastischen Zwischenschichten, über die das Funktionselement mit den Glasscheiben verbunden ist, können komplett getönt oder gefärbt sein.

US 2015/331296 A1 offenbart eine Verbundscheibe mit einem darin einlaminierten elektrisch regelbaren Funktionselement, wobei die Glasscheiben komplett getönt oder gefärbt sein können.

Der vorliegenden Erfindung liegt die Aufgabe zugrunde, eine Windschutzscheibe mit elektrisch regelbarer Sonnenblende bereitzustellen, die insbesondere hinsichtlich ihrer ästhetischen Wirkung verbessert ist.

Die Aufgabe der vorliegenden Erfindung wird durch eine Windschutzscheibe mit elektrisch regelbarer Sonnenblende gemäß dem unabhängigen Anspruch 1 gelöst. Bevorzugte Ausführungen gehen aus den Unteransprüchen hervor.

Die erfindungsgemäße Windschutzscheibe mit elektrisch regelbarer Sonnenblende umfasst mindestens eine Außenscheibe und eine Innenscheibe, die über eine Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Innenraum (Fahrzeuginnenraum) zugewandte Scheibe der Windschutzscheibe bezeichnet. Mit Außenscheibe wird die der äußeren Umgebung zugewandte Scheibe bezeichnet.

Die Windschutzscheibe weist eine Oberkante und eine Unterkante auf sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Die erfindungsgemäße Windschutzscheibe enthält ein Funktionselement mit elektrisch regelbaren optischen Eigenschaften, das in die Zwischenschicht eingelagert ist. Das Funktionselement ist dabei oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Das Funktionselement ist über einen Bereich einer ersten thermoplastischen Schicht mit der Außenscheibe und über einen Bereich einer zweiten thermoplastischen Schicht mit der Innenscheibe verbunden. Typischerweise wird die Zwischenschicht durch mindestens die erste und die zweite thermoplastische Schicht gebildet, die flächig aufeinander angeordnet werden und miteinander laminiert werden, wobei das Funktionselement zwischen die beiden Schichten eingelegt wird. Die mit dem Funktionselement überlappenden Bereiche der Schichten bilden dann die Bereiche, welche das Funktionselement mit den Scheiben verbinden. In anderen Bereichen der Scheibe, wo die thermoplastischen Schichten direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine thermoplastische Schicht kann beispielsweise durch eine einzige thermoplastische Folie ausgebildet werden. Eine thermoplastische Schicht kann auch aus Abschnitten unterschiedlicher thermoplastischer Folien gebildet werden, deren Seitenkanten aneinander gesetzt sind.

Erfindungsgemäß ist der besagte Bereich der ersten oder der zweiten thermoplastischen Schicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der thermoplastischen Schicht erniedrigt somit die Transmission der Windschutzscheibe im Bereich der Sonnenblende. Insbesondere wird der ästhetische Eindruck der Funktionselements verbessert, weil die Tönung zu einem neutraleren Erscheinungsbild führt, das auf den Betrachter angenehmer wirkt. Das ist der Vorteil der Erfindung.

Die Windschutzscheibe ist bevorzugt für ein Kraftfahrzeug vorgesehen, besonders bevorzugt für einen Personenkraftwagen.

Unter elektrisch regelbaren optischen Eigenschaften werden im Sinne der Erfindung solche Eigenschaften verstanden, die stufenlos regelbar sind, aber gleichermaßen auch solche, die zwischen zwei oder mehr diskreten Zuständen geschaltet werden können.

Die elektrische Regelung der Sonnenblende erfolgt beispielsweise mittels Knöpfen, Dreh- oder Schiebereglern, die in den Armaturen des Fahrzeugs integriert sind. Es kann aber auch eine Schaltfläche zur Regelung der Sonnenblende in die Windschutzscheibe integriert sein, beispielsweise eine kapazitive Schaltfläche. Alternativ kann die Sonnenblende auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

Der getönte oder gefärbte Bereich der thermoplastischen Schicht weist bevorzugt eine Transmission im sichtbaren Spektralbereich von 10 % bis 50 % auf, besonders bevorzugt von 20 % bis 40 %. Damit werden besonders gute Ergebnisse erreicht hinsichtlich Blendschutz und optischem Erscheinungsbild.

Die Zwischenschicht, also die erste und die zweite thermoplastische Schicht und etwaige weitere polymere Schichten, sind im zentralen Sichtfeld nicht getönt oder gefärbt, sondern klar und transparent. Dadurch wird sichergestellt, dass die Durchsicht durch das zentrale Sichtfeld nicht eingeschränkt wird, so dass die Scheibe als Windschutzscheibe verwendet werden kann. Unter einer transparenten thermoplastischen Schicht wird eine Schicht mit einer Lichttransmission im sichtbaren Spektralbereich von mindestens 70 % bevorzugt mindestens 80% bezeichnet. Die transparente Zwischenschicht liegt zumindest im Sichtfeld A, bevorzugt auch im Sichtfeld B nach ECE-R43 vor.

Die thermoplastische Schicht kann durch eine einzelne thermoplastische Folie ausgebildet werden, in der der getönte oder gefärbte Bereich durch lokales Tönen oder Färben erzeugt wird. Solche Folien sind beispielsweise durch Koextrusion erhältlich. Alternativ können ein ungetönter Folienabschnitt und ein getönter oder gefärbter Folienabschnitt zur thermoplastischen Schicht zusammengesetzt werden.

Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein. In einer Ausgestaltung nimmt der Transmissionsgrad im getönten oder gefärbten Bereich zumindest abschnittsweise mit steigendem Abstand zur Oberkante ab. So können scharfe Kanten des getönten oder gefärbten Bereichs vermieden werden, so dass der Übergang von der Sonnenblende in den transparenten Bereich der Windschutzscheibe graduell verläuft, was ästhetisch ansprechender aussieht.

In einer Ausgestaltung der Erfindung steht der getönte oder gefärbte Bereich der ersten oder zweiten thermoplastischen Schicht über die Unterkante des Funktionselements über, erstreckt sich also weiter in Richtung zum zentralen Sichtfeld als das Funktionselement.

Dadurch wird ein besonders ansprechendes Erscheinungsbild erzeugt. Der überstehende Bereich weist bevorzugt einen Transmissionsverlauf auf, wobei die Transmission in Richtung zum zentralen Sichtfeld zunimmt und die Tönung gleichsam zum zentralen Sichtfeld hin graduell ausläuft.

In einer vorteilhaften Ausgestaltung ist der Bereich der ersten thermoplastischen Schicht, also der Bereich zwischen dem Funktionselement und der Außenscheibe getönt. Dies bewirkt einen besonders ästhetischen Eindruck des Fahrzeugs von außen betrachtet. Der Bereich der zweiten thermoplastischen Schicht zwischen Funktionselement und Innenscheibe kann optional zusätzlich gefärbt oder getönt sein.

Erfindungsgemäß ist das Funktionselement ein PDLC-Funktionselement (*polymer dispersed liquid crystal*). Wie vorstehend bereits beschrieben wurde, weisen solche PDLC-Funktionselemente im spannungsfreien Zustand ein unästhetisches milchiges Aussehen auf. Der vorteilhafte Effekt der Erfindung, nämlich die Verbesserung des optischen Eindrucks, tritt daher im Zusammenhang mit PDLC-Funktionselementen in besonderem Maße zum Tragen.

Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Das regelbare Funktionselement umfasst typischerweise eine aktive Schicht zwischen zwei Flächenelektroden. Die aktive Schicht weist die regelbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (*transparent conducting oxide,* TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und/oder Fluordotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement kann natürlich außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Das Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie.

Die Trägerfolien enthalten bevorzugt zumindest ein thermoplastisches Polymer, besonders bevorzugt Polyethylenterephthalat (PET). Das ist besonders vorteilhaft im Hinblick auf die Stabilität der Mehrschichtfolie. Die Trägerfolien können aber auch beispielsweise Ethylenvinylacetat (EVA) und / oder Polyvinylbutyral (PVB), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen enthalten. Die Dicke jeder Trägerfolie beträgt bevorzugt von 0,1 mm bis 1 mm, besonders bevorzugt von 0,1 mm bis 0,2 mm.

Typischerweise weisen die Trägerfolien jeweils eine elektrisch leitfähige Beschichtung auf, die als Flächenelektrode fungiert und bevorzugt der aktiven Schicht zugewandt ist. Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. bei mechanisch geschnittenen Seitenkanten kann die Gefahr bestehen, dass sich das Material gleichsam zurückzieht, was optisch auffällig ist und die Ästhetik der Scheibe nachteilig beeinflusst.

Erfindungsgemäß weist das Funktionselement eine Randversiegelung auf. Die Randversiegelung bedeckt umlaufend die Seitenkante des Funktionselements und verhindert insbesondere die Diffusion von chemischen Bestandteilen der thermoplastischen Schichten, beispielsweise Weichmacher, in die aktive Schicht. Zumindest entlang der in Durchsicht durch die Windschutzscheibe sichtbaren Seitenkanten, insbesondere der Unterkante, des Funktionselements und bevorzugt entlang aller Seitenkanten ist die Randversiegelung durch einen transparenten farblosen Klebstoff oder ein transparentes farbloses Klebeband gebildet. Beispielsweise können acryl- oder silikonbasierte Klebebänder als Randversiegelung verwendet werden. Die transparente farblose Randversiegelung hat den Vorteil, dass die Kante des Funktionselements bei Durchsicht durch die Windschutzscheibe nicht störend auffällt.

Die Kanten des Funktionselements werden entsprechend der Einbaulage der Windschutzscheibe bezeichnet. Die Unterkante des Funktionselements ist also diejenige seiner Seitenkanten, die von der Oberkante der Windschutzscheibe abgewandt ist und zum zentralen Sichtfeld weist. Die Oberkante des Funktionselements ist der Oberkante der Windschutzscheibe zugewandt. Die Seitenkante des Funktionselements verlaufen zwischen Oberkante und Unterkante.

In einer bevorzugten Ausgestaltung ist das Funktionselement, genauer die Seitenkanten des Funktionselements umlaufend von einer dritten thermoplastischen Schicht umgeben. Die dritte thermoplastische Schicht ist rahmenartig ausgebildet mit einer Aussparung, in welche das Funktionselement eingelegt wird. Die dritte thermoplastische Schicht kann durch eine thermoplastische Folie gebildet werden, in welche die Aussparung durch Ausschneiden eingebracht worden ist. Alternativ kann die dritte thermoplastische Schicht auch aus mehreren Folienabschnitten um das Funktionselement zusammengesetzt werden. Die Zwischenschicht ist aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte thermoplastische Schicht zwischen der ersten und der zweiten thermoplastischen Schicht angeordnet, wobei die Seitenkanten aller thermoplastischen Schichten bevorzugt in Deckung befindlich sind. Die dritte thermoplastische Schicht weist bevorzugt etwa die gleiche Dicke auf wie das Funktionselement. Dadurch wird der lokale Dickenunterschied der Windschutzscheibe, der durch das örtlich begrenzte Funktionselement eingebracht wird, kompensiert, so dass Glasbruch beim Laminieren vermieden werden kann.

Die in Durchsicht durch die Windschutzscheibe sichtbaren Seitenkanten des Funktionselements sind bevorzugt bündig mit der dritten thermoplastischen Schicht angeordnet, so dass zwischen der Seitenkante des Funktionselement und der zugeordneten Seitenkante der thermoplastischen Schicht keine Lücke existiert. Das gilt insbesondere für die Unterkante des Funktionselements, die typischerweise sichtbar ist. So ist die Grenze zwischen dritter thermoplastischer Schicht und Funktionselement optisch unauffälliger.

In einer bevorzugten Ausgestaltung sind die Unterkanten des Funktionselements und des getönten Bereichs der thermoplastischen Schicht an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestalten. Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante v-förmig angenähert sind.

Erfindungsgemäß ist das Funktionselement durch Isolierungslinien in Segmente aufgeteilt. Die Isolierungslinien sind insbesondere in die Flächenelektroden eingebracht sein, so dass die Segmente der Flächenelektrode elektrisch voneinander isoliert sind. Die einzelnen Segmente sind unabhängig voneinander mit der Spannungsquelle verbunden, so dass sie separat angesteuert werden können. So können verschiedene Bereich der Sonnenblende unabhängig geschaltet werden. Besonders bevorzugt sind die Isolierungslinien und die Segmente in Einbaulage horizontal angeordnet. Damit kann die Höhe der Sonnenblende vom Benutzer geregelt werden. Der Begriff "horizontal" ist hier breit auszulegen und bezeichnet eine Ausbreitungsrichtung, die zwischen den Seitenkanten der Windschutzscheibe verläuft. Die Isolierungslinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Isolierungslinien sind natürlich auch denkbar.

Die Isolierungslinien weisen beispielsweise eine Breite von 5 µm bis 500 µm, insbesondere 20 µm bis 200 µm auf. Die Breite der Segmente, also der Abstand benachbarten Isolierungslinien kann vom Fachmann gemäß den Anforderungen im Einzelfall geeignet gewählt werden.

Die Isolierungslinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden. Die Oberkante und die Seitenkanten des Funktionselements werden in Durchsicht durch die Windschutzscheibe bevorzugt von einem opaken Abdeckdruck verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselement zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, so dass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein regelbares Funktionselement im Strahlengang beeinträchtigt werden würde, beispielsweise Regensensoren. Es ist auch möglich, die Sonnenblende mit mindestens zwei voneinander getrennten Funktionselementen zu realisieren, wobei zwischen den Funktionselementen ein Abstand besteht, der einen Raum für Sensor- oder Kamerafenster bereitstellt.

Das Funktionselement (oder die Gesamtheit der Funktionselemente im vorstehend beschriebenen Fall von mehreren Funktionselementen) ist bevorzugt über die gesamte Breite der Windschutzscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die erste thermoplastische Schicht und die zweite thermoplastische Schicht und gegebenenfalls auch die dritte thermoplastischen Schicht enthalten bevorzugt zumindest Polyvinylbutyral (PVB), Ethylenvinylacetat (EVA) und / oder Polyurethan (PU), besonders bevorzugt PVB.

Die Dicke jeder thermoplastischen Schicht beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Die Außenscheibe und die Innenscheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar sind, oder auch getönt oder gefärbt, solange die Windschutzscheibe im zentralen Sichtbereich eine ausreichende Lichttransmission aufweist, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen).

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Ein großer Vorteil der Erfindung besteht darin, dass auf eine klassische am Fahrzeugdach montierte, mechanisch klappbare Sonnenblende verzichtet werden kann. Die Erfindung umfasst daher auch ein Fahrzeug, bevorzugt Kraftfahrzeug, insbesondere Personenkraftwagen, welches keine solche klassische Sonnenblende aufweist.

Die Erfindung umfasst außerdem ein Verfahren zur Herstellung einer erfindungsgemäßen Windschutzscheibe, wobei zumindest
a) eine Außenscheibe, eine erste thermoplastische Schicht, ein Funktionselement mit elektrisch regelbaren optischen Eigenschaften, eine zweite thermoplastische Schicht und eine Innenscheibe in dieser Reihenfolge übereinander angeordnet werden, wobei das Funktionselement in einem Bereich oberhalb eines zentralen Sichtfelds angeordnet wird und wobei die erste thermoplastische Schicht und/oder die zweite thermoplastische Schicht einen getönten oder gefärbten Bereich aufweist, der zwischen dem Funktionselement und der Außenscheibe oder der Innenscheibe angeordnet wird,
b) die Außenscheibe und die Innenscheibe durch Lamination verbunden werden, wobei aus der ersten thermoplastischen Schicht und der zweiten thermoplastischen Schicht eine Zwischenschicht mit eingelagertem Funktionselement gebildet wird.

Die elektrische Kontaktierung der Flächenelektroden des Funktionselements erfolgt bevorzugt vor dem Laminieren der Windschutzscheibe.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Die Erfindung umfasst außerdem die Verwendung eines getönten oder gefärbten Bereichs einer thermoplastischen Schicht zur Verbindung eines Funktionselements mit elektrisch regelbaren optischen Eigenschaften mit einer Außenscheibe oder einer Innenscheibe einer Windschutzscheibe, wobei durch den getönten oder gefärbten Bereich der thermoplastischen Schicht und das Funktionselement eine elektrisch regelbare Sonnenblende realisiert wird.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine erste Ausgestaltung der erfindungsgemäßen Windschutzscheibe,
- Fig. 2: einen Querschnitt durch die Windschutzscheibe aus Figur 1,
- Fig. 3: eine vergrößerte Darstellung des Bereichs Z aus Figur 2,
- Fig. 4: einen Querschnitt durch die weitere Ausgestaltung der erfindungsgemäßen Windschutzscheibe,
- Fig. 5: eine Draufsicht auf eine weitere Ausgestaltung der erfindungsgemäßen Windschutzscheibe,
- Fig. 6: ein Ausführungsbeispiel des erfindungsgemäßen Verfahrens anhand eines Flussdiagramms.

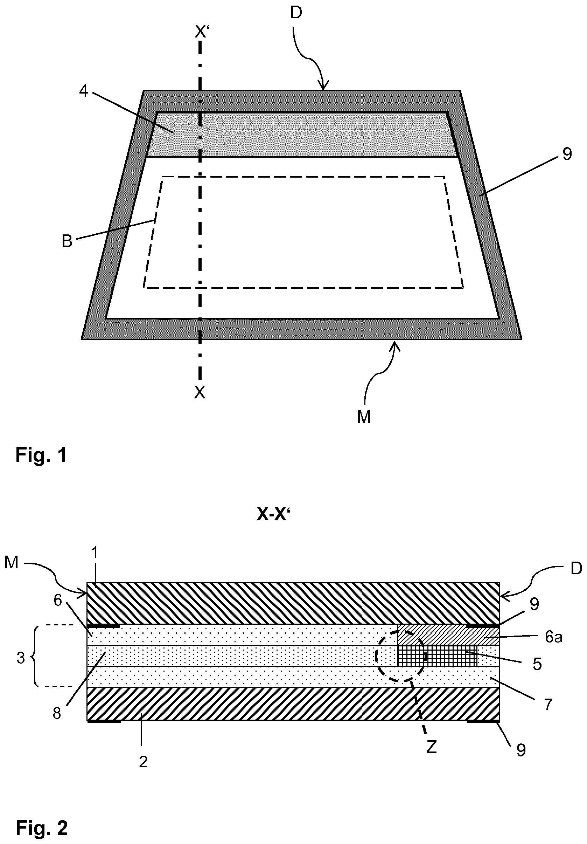

Fig. 1, Fig. 2 und Fig. 3 zeigen je ein Detail einer erfindungsgemäßen Windschutzscheibe. Die Windschutzscheibe umfasst eine Außenscheibe 1 und eine Innenscheibe 2, die über eine Zwischenschicht 3 miteinander verbunden sind. Die Außenscheibe 1 weist eine Dicke von 2,1 mm auf und besteht aus einem grün eingefärbten Kalk-Natron-Glas. Die Innenscheibe 2 weist eine Dicke von 1,6 mm auf und besteht aus einem klaren Kalk-Natron-Glas. Die Windschutzscheibe weist eine in Einbaulage dem Dach zugewandte Oberkante D und eine in Einbaulage dem Motorraum zugewandte Unterkanten M auf.

Die Windschutzscheibe ist mit einer elektrisch regelbaren Sonnenblende 4 ausgestattet in einem Bereich oberhalb des zentralen Sichtbereichs B (wie in ECE-R43 definiert). Die Sonnenblende 4 ist durch eine kommerzielle erhältliche PDLC-Mehrschichtfolie als Funktionselement 5 gebildet, die in die Zwischenschicht 3 eingelagert ist. Die Höhe der Sonnenblende beträgt beispielsweise 21 cm. Die Zwischenschicht 3 umfasst insgesamt drei thermoplastischen Schichten 6, 7, 8, die jeweils durch eine thermoplastische Folie mit einer Dicke von 0,38 mm aus PVB ausgebildet sind. Die erste thermoplastische Schicht 6 ist mit der Außenscheibe 1 verbunden, die zweite thermoplastische Schicht 7 mit der Innenscheibe 2. Die dazwischenliegende dritte thermoplastische Schicht 8 weist einen Ausschnitt auf, in welchen die zugeschnittene PDLC-Mehrschichtfolie passgenau, das heißt an allen Seiten bündig, eingelegt ist. Die dritte thermoplastische Schicht bildet also gleichsam eine Art Passepartout für das Funktionselement 5, welches somit rundum in thermoplastisches Material eingekapselt und dadurch geschützt ist.

Die erste thermoplastische Schicht 6 weist einen getönten Bereich 6a auf, der zwischen dem Funktionselement 5 und der Außenscheibe 1 angeordnet ist. Die Lichttransmission der Windschutzscheibe dadurch im Bereich der Sonnenblende 4 zusätzlich herabgesetzt und das milchige Aussehen des PDLC-Funktionselements 5 im diffusiven Zustand abgemildert. Die Ästhetik der Windschutzscheibe wird dadurch deutlich ansprechender gestaltet. Die erste thermoplastische Schicht 6 weist im Bereich 6a beispielsweise eine durchschnittliche Lichttransmission von 30% auf, womit gute Ergebnisse erzielt werden.

Der Bereich 6a kann homogen getönt sein. Oft ist es jedoch optisch ansprechender, wenn die Tönung in Richtung der Unterkante des Funktionselements 5 geringer wird, so dass der getönte und der ungetönte Bereich fließend ineinander übergehen.

Im dargestellten Fall sind die Unterkanten des getönten Bereichs 6a und des PDLC-Funktionselements 5 bündig angeordnet. Dies ist aber nicht notwendigerweise der Fall. Es ist ebenso möglich, dass der getönte Bereich 6a über das Funktionselement 5 übersteht oder dass umgekehrt das Funktionselement 5 über den getönten Bereich 6a übersteht. Im letztgenannten Fall wäre nicht das gesamte Funktionselement 5 über den getönten Bereich 6a mit der Außenscheibe 1 verbunden.

Das regelbare Funktionselement 5 ist eine Mehrschichtfolie, bestehend aus einer aktiven Schicht 11 zwischen zwei Flächenelektroden 12, 13 und zwei Trägerfolien 14, 15. Die aktive Schicht 11 enthält eine Polymermatrix mit darin dispergierten Flüssigkristallen, die sich in Abhängigkeit der an die Flächenelektroden angelegten elektrischen Spannung ausrichten, wodurch die optischen Eigenschaften geregelt werden können. Die Trägerfolien 14, 15 bestehen aus PET und weisen eine Dicke von beispielsweise 0,125 mm auf. Die Trägerfolien 14, 15 sind mit einer zur aktiven Schicht 11 weisenden Beschichtung aus ITO mit einer Dicke von etwa 100 nm versehen, welche die Elektroden 12, 13 ausbilden. Die Elektroden 12, 13 sind über nicht dargestellte Sammelleiter (beispielweise ausgebildet durch einen silberhaltigen Siebdruck) und nicht dargestellte Verbindungskabel mit der Bordelektrik verbindbar.

Die Windschutzscheibe weist, wie üblich, einen umlaufenden peripheren Abdeckdruck 9 auf, der durch ein opakes Emaille auf den innenraumseitigen Oberflächen (in Einbaulage dem Innenraum des Fahrzeugs zugewandt) der Außenscheibe 1 und der Innenscheibe 2 ausgebildet ist. Der Abstand des Funktionselements 5 zur Oberkante D und den Seitenkanten der Windschutzscheibe ist kleiner als die Breite des Abdeckdrucks 9, so dass die Seitenkanten des Funktionselements 5 - mit Ausnahme der zum zentralen Sichtfeld B weisenden Seitenkante - durch den Abdeckdruck 9 verdeckt sind. Auch die nicht dargestellten elektrischen Anschlüsse werden sinnvollerweise im Bereich des Abdeckdrucks 9 angebracht und somit versteckt.

Die Seitenkanten des Funktionselements 5 sind umlaufend mit einer Randversiegelung 10 versehen, die durch ein transparentes Acryl-Klebeband ausgebildet ist. Diffusion in die oder aus der aktiven Schicht 11 wird dadurch unterbunden. Da die Randversiegelung 10 transparent ist, fällt auch die untere Seitenkante, welche nicht durch den Abdeckdruck 9 verdeckt ist, nicht störend auf. Die Randversiegelung 10 verläuft umlaufend um die Seitenkanten der Mehrschichtfolie und erstreckt sich ausgehend von den Seitenkanten einige Millimeter über die von der aktiven Schicht 11 abgewandten Oberflächen der Trägerfolien 14, 15. Die Randversiegelung 10 verhindert insbesondere die Diffusion von Weichmachern und anderen Kleberbestandteilen der thermoplastischen Schicht 8 in die aktive Schicht 11, wodurch die Alterung des Funktionselements 5 vermindert wird.

Für die thermoplastischen Schichten 6, 7, 8 kann bevorzugt ein sogenanntes "High Flow PVB" verwendet werden, welches im Vergleich zu Standard-PVB-Folien ein stärkeres Fließverhalten aufweist. So zerfließen die Schichten stärker um das Funktionselement 5 herum, wodurch ein homogenerer optischer Eindruck entsteht und der Übergang von Funktionselement 5 zu Schicht 8 weniger stark auffällt. Das "High Flow PVB" kann für alle oder auch nur für eine oder mehrere der thermoplastischen Schichten 6, 7, 8 mit direktem Kontakt zum Funktionselement 5 verwendet werden.

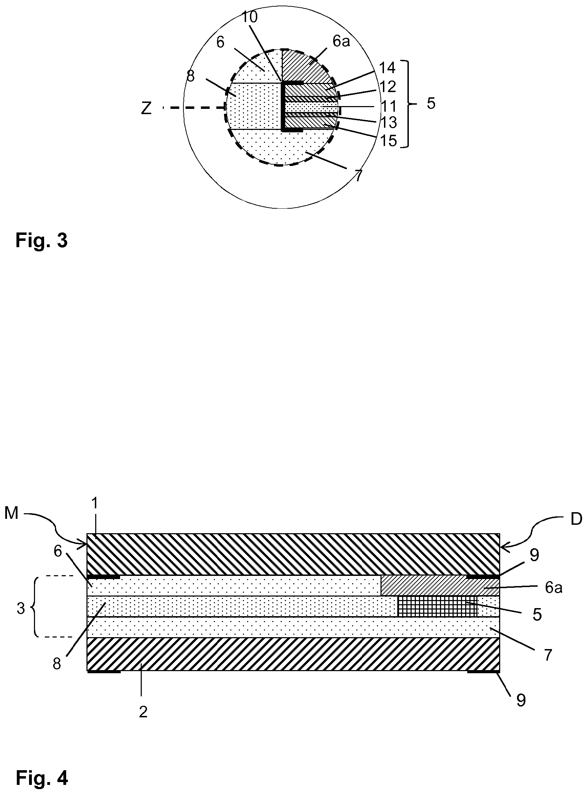

Fig. 4 zeigt einen Querschnitt durch eine weitere Ausgestaltung der erfindungsgemäßen Windschutzscheibe. Der getönte Bereich 6a der ersten thermoplastischen Schicht 6 steht über die Unterkante des Funktionselements 5 über. Der überstehende Teil des getönten Bereichs 6a kann einen Transmissionsverlauf aufweisen, so dass die Tönung zum zentralen Sichtfeld hin gleichsam ausläuft.

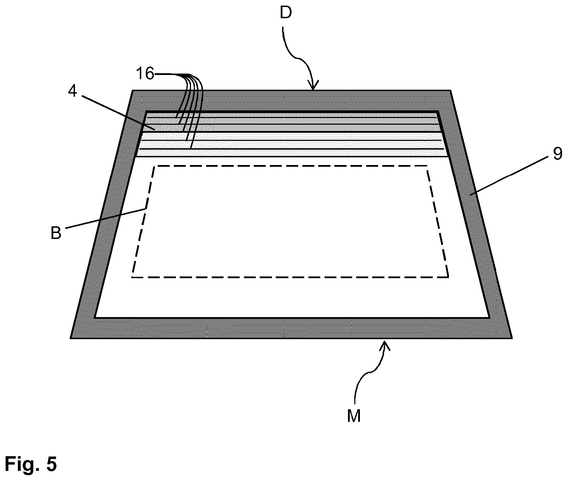

Fig. 5 zeigt eine Draufsicht auf eine weitere Ausgestaltung der Ausgestaltung der erfindungsgemäßen Windschutzscheibe. Die Windschutzscheibe und die regelbare Sonnenblende 4 entsprechen im Wesentlichen der Ausführung aus Figur 1. Das PDLC-Funktionselement 5 ist allerdings durch horizontale Isolierungslinien 16 in sechs streifenartige Segmente aufgeteilt. Die Isolierungslinien 16 weisen beispielsweise eine Breite von 40 µm bis 50 µm und einen gegenseitigen Abstand von 3,5 cm auf. Sie sind mittels eines Lasers in die vorgefertigte Mehrschichtfolie eingebracht worden. Die Isolierungslinien 16 trennen insbesondere die Elektroden 12, 13 in voneinander isolierte Streifen, die jeweils über einen separaten elektrischen Anschluss verfügen. So sind die Segmente unabhängig voneinander schaltbar. Je dünner die Isolierungslinien 16 ausgeführt sind, desto unauffälliger sind sie. Mittels Ätzverfahren können noch dünnere Isolierungslinien 16 realisiert werden.

Durch die Segmentierung lässt sich die Höhe der abgedunkelten Sonnenblende 4 einstellen. So kann der Fahrer abhängig vom Sonnenstand die gesamte Sonnenblende 4 oder auch nur einen Teil davon abdunkeln. In der Figur ist angedeutet, dass die obere hälfte der Sonnenblende 4 abgedunkelt ist und die untere Hälfte transparent ist.

In einer besonders komfortablen Ausgestaltung wird die segmentierte Sonnenblende 4 durch eine im Bereich der Sonnenblende 4 angeordnete kapazitive Schaltfläche gesteuert, wobei der Fahrer durch den Ort, an dem er die Scheibe berührt, den Abdunklungsgrad festlegt. Alternativ kann die Sonnenblende 4 auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

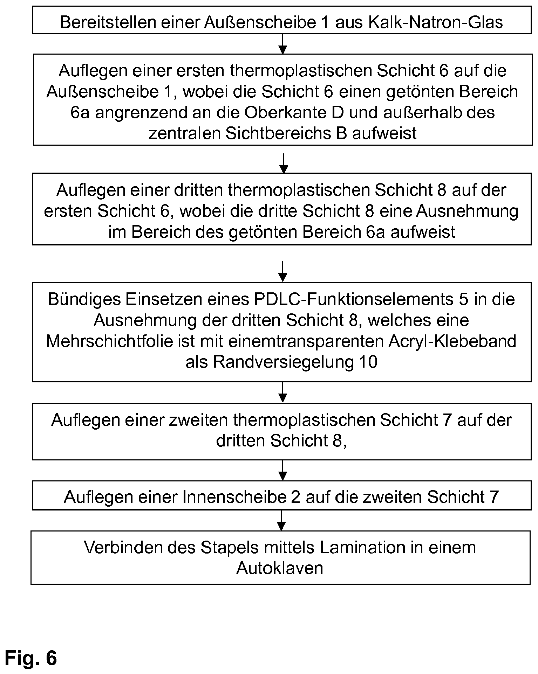

Fig. 6 zeigt ein Ausführungsbeispiel des erfindungsgemäßen Herstellungsverfahrens anhand eines Flussdiagramms.

### Bezugszeichenliste:

- (1): Außenscheibe
- (2): Innenscheibe
- (3): Zwischenschicht
- (4): elektrisch regelbare Sonnenblende
- (5): Funktionselement mit elektrisch regelbaren optischen Eigenschaften
- (6): erste thermoplastische Schicht
- (6a): getönter Bereich der ersten thermoplastischen Schicht
- (7): zweite thermoplastische Schicht
- (8): dritte thermoplastische Schicht
- (9): Abdeckdruck
- (10): Randversiegelung
- (11): aktive Schicht des Funktionselements 5
- (12): Flächenelektrode des Funktionselements 5
- (13): Flächenelektrode des Funktionselements 5
- (14): Trägerfolie
- (15): Trägerfolie
- (16): Isolierungslinien

- B: zentrales Sichtfeld der Windschutzscheibe

- D: Oberkante der Windschutzscheibe, Dachkante
- M: Unterkante der Windschutzscheibe, Motorkante

- X-X': Schnittlinie
- Z: vergrößerter Bereich

## Patentansprüche

1. Windschutzscheibe mit elektrisch regelbarer Sonnenblende (4), mindestens umfassend eine Außenscheibe (1) und eine Innenscheibe (2), die über eine Zwischenschicht (3) miteinander verbunden sind,
wobei oberhalb eines zentralen Sichtfelds (B) ein Funktionselement (5) mit elektrisch regelbaren optischen Eigenschaften in die Zwischenschicht (3) eingelagert ist, das über einen Bereich (6a) einer ersten thermoplastischen Schicht (6) mit der Außenscheibe (1) und über einen Bereich einerzweiten thermoplastischen Schicht (7) mit der Innenscheibe (2) verbunden ist,
wobei das Funktionselement (5) durch Isolierungslinien (16) in Segmente aufgeteilt ist, die separat elektrisch angesteuert werden können,
**dadurch gekennzeichnet, dass**
das Funktionselement (5) ein PDLC-Funktionselement ist
dass der Bereich (6a) der ersten thermoplastischen Schicht (6) und/oder der Bereich der zweiten thermoplastischen Schicht (7) getönt oder gefärbt ist, und, dass
das Funktionselement (5) eine Randversiegelung (10) aufweist, die durch einen transparenten farblosen Klebstoff oder ein transparentes farbloses Klebeband gebildet ist.

2. Windschutzscheibe nach Anspruch 1, wobei die Zwischenschicht (3) im zentralen Sichtfeld (B) transparent ist.

3. Windschutzscheibe nach Anspruch 1 oder 2, wobei der getönte oder gefärbte Bereich (6a) der thermoplastischen Schicht (6, 7) eine Transmission im sichtbaren Spektralbereich von 10 % bis 50 % aufweist, bevorzugt von 20 % bis 40 %.

4. Windschutzscheibe nach einem der Ansprüche 1 bis 3, wobei das Funktionselement (5) umlaufend von einer dritten thermoplastischen Schicht (8) umgeben ist.

5. Windschutzscheibe nach Anspruch 4, wobei die Unterkante des Funktionselements (5) bündig mit der dritten thermoplastischen Schicht (8) angeordnet ist.

6. Windschutzscheibe nach einem der Ansprüche 1 bis 5, wobei die Oberkante und die Seitenkanten des Funktionselements (5) in Durchsicht von einem opaken Abdeckdruck (9) verdeckt werden.

7. Windschutzscheibe nach einem der Ansprüche 1 bis 6, wobei die erste thermoplastische Schicht (6) und die zweite thermoplastische Schicht (7) zumindest Polyvinylbutyral (PVB), Ethylenvinylacetat (EVA) und/oder Polyurethan (PU) enthalten, bevorzugt Polyvinylbutyral (PVB).

8. Windschutzscheibe nach einem der Ansprüche 1 bis 7, wobei der getönte oder gefärbte Bereich (6a) der ersten thermoplastischen Schicht (6) oder der zweiten thermoplastischen Schicht (7) über die Unterkante des Funktionselements (5) übersteht.

9. Fahrzeug, ausgestattet mit einer Windschutzscheibe nach einem der Ansprüche 1 bis 8, welches keine am Dach montierte, mechanisch klappbare Sonnenblende aufweist.

10. Verfahren zur Herstellung einer Windschutzscheibe mit elektrisch regelbarer Sonnenblende (4) nach einem der Ansprüche 1 bis 9, wobei zumindest
a) eine Außenscheibe (1), eine erste thermoplastische Schicht (6), ein Funktionselement (5) mit elektrisch regelbaren optischen Eigenschaften, eine zweite thermoplastische Schicht (7) und eine Innenscheibe (2) in dieser Reihenfolge übereinander angeordnet werden, wobei das Funktionselement (5) in einem Bereich oberhalb eines zentralen Sichtfelds (B) angeordnet wird und wobei die erste thermoplastische Schicht (6) und/oder die zweite thermoplastische Schicht (7) einen getönten oder gefärbten Bereich (6a) aufweist, der zwischen dem Funktionselement (5) und der Außenscheibe (1) oder der Innenscheibe (2) angeordnet wird und wobei das Funktionselement (5) ein PDLC-Funktionselement ist und eine Randversiegelung (10) aufweist, die durch einen transparenten farblosen Klebstoff oder ein transparentes farbloses Klebeband gebildet wird,
b) die Außenscheibe (1) und die Innenscheibe (2) durch Lamination verbunden werden, wobei aus der ersten thermoplastischen Schicht (6) und der zweiten thermoplastischen Schicht (7) eine Zwischenschicht (3) mit eingelagertem Funktionselement (5) gebildet wird.

11. Verfahren nach Anspruch 10, wobei das Funktionselement (5) als Mehrschichtfolie vorliegt und mittels eines Lasers zurechtgeschnitten wird.

12. Verwendung eines getönten oder gefärbten Bereichs (6a) einer thermoplastischen Schicht (6,7) zur Verbindung eines Funktionselements (5) mit elektrisch regelbaren optischen Eigenschaften mit einer Außenscheibe (1) oder einer Innenscheibe (2) einer Windschutzscheibe, wobei das Funktionselement (5) durch Isolierungslinien (16) in Segmente aufgeteilt ist, die separat elektrisch angesteuert werden können und wobei durch den getönten oder gefärbten Bereich (6a) der thermoplastischen Schicht (6,7) und das Funktionselement (5) eine elektrisch regelbare Sonnenblende (4) realisiert wird, wobei das Funktionselement (5) ein PDLC-Funktionselement ist und eine Randversiegelung (10) aufweist, die durch einen transparenten farblosen Klebstoff oder ein transparentes farbloses Klebeband gebildet wird.

## Claims

1. Windshield with an electrically controllable sun visor (4), at least comprising an outer pane (1) and an inner pane (2) that are joined to one another via an intermediate layer (3),
wherein above a central field of vision (B), a functional element (5) with electrically controllable optical properties is incorporated into the intermediate layer (3), which element is connected to the outer pane (1) via a region (6a) of a first thermoplastic layer (6) and to the inner pane (2) via a region of a second thermoplastic layer (7),
wherein the functional element (5) is divided by isolating lines (16) into segments that can be electrically actuated separately,
**characterized in that**
the functional element (5) is a PDLC functional element,
that
the region (6a) of the first thermoplastic layer (6) and/or the region of the second thermoplastic layer (7) is tinted or colored,
and,
that
the functional element (5) has an edge seal (10) that is formed by a transparent colorless adhesive or a transparent colorless adhesive tape.

2. Windshield according to claim 1, wherein the intermediate layer (3) is transparent in the central field of vision (B).

3. Windshield according to claim 1 or 2, wherein the tinted or colored region (6a) of the thermoplastic layer (6, 7) has transmittance of 10% to 50%, preferably of 20% to 40%, in the visible spectral range.

4. Windshield according to one of claims 1 through 3, wherein the functional element (5) is peripherally surrounded by a third thermoplastic layer (8).

5. Windshield according to claim 4, wherein the lower edge of the functional element (5) is arranged flush with the third thermoplastic layer (8).

6. Windshield according to one of claims 1 through 5, wherein the upper edge and the side edges of the functional element (5) are obscured in through-vision by an opaque masking print (9).

7. Windshield according to claims 1 through 6, wherein the first thermoplastic layer (6) and the second thermoplastic layer (7) contain at least polyvinyl butyral (PVB), ethylene vinyl acetate (EVA), and/or polyurethane (PU), preferably polyvinyl butyral (PVB).

8. Windshield according to one of claims 1 through 7, wherein the tinted or colored region (6a) of the first thermoplastic layer (6) or of the second thermoplastic layer (7) protrudes beyond the lower edge of the functional element (5).

9. Vehicle, equipped with a windshield according to one of claims 1 through 8, which has no roof-mounted mechanically hinged sun visor.

10. Method for producing a windshield with an electrically controllable sun visor (4) according to one of claims 1 through 9, wherein at least
a) an outer pane (1), a first thermoplastic layer (6), a functional element (5) with electrically controllable optical properties, a second thermoplastic layer (7), and an inner pane (2) are arranged in this order one above another, wherein the functional element (5) is arranged in a region above a central field of vision (B) and wherein the first thermoplastic layer (6) and/or the second thermoplastic layer (7) has a tinted or colored region (6a) that is arranged between the functional element (5) and the outer pane (1) or the inner pane (2), and wherein the functional element (5) is a PDLC functional element and has an edge seal (10) that is formed by a transparent colorless adhesive or a transparent colorless adhesive tape.
b) the outer pane (1) and the inner pane (2) are joined by lamination, wherein an intermediate layer (3) with an incorporated functional element (5) is formed from the first thermoplastic layer (6) and the second thermoplastic layer (7).

11. Method according to claim 10, wherein the functional element (5) is a multilayer film and is cut to size using a laser.

12. Use of a tinted or colored region (6a) of a thermoplastic layer (6,7) for connecting a functional element (5) with electrically controllable optical properties to an outer pane (1) or to an inner pane (2) of a windshield, wherein the functional element (5) is divided by isolating lines (16) into segments that can be electrically actuated separately and wherein an electrically controllable sun visor (4) is realized by means of the tinted or colored region (6a) of the thermoplastic layer (6,7) and the functional element (5), wherein the functional element (5) is a PDLC functional element and has an edge seal (10) that is formed by a transparent colorless adhesive or a transparent colorless adhesive tape.

## Revendications

1. - Pare-brise avec pare-soleil (4) réglable électriquement, comportant au moins
une vitre extérieure (1) et une vitre intérieure (2), qui sont reliées entre elles par une couche intermédiaire (3),
dans lequel, au-dessus d'un champ de vision central (B), un élément fonctionnel (5) ayant des propriétés optiques réglables électriquement est incorporé dans la couche intermédiaire (3), lequel est relié à la vitre extérieure (1) par l'intermédiaire d'une zone (6a) d'une première couche thermoplastique (6) et à la vitre intérieure (2) par l'intermédiaire d'une zone d'une deuxième couche thermoplastique (7),
l'élément fonctionnel (5) étant divisé par des lignes isolantes (16) en segments qui peuvent être commandés électriquement de façon séparée
**caractérisé par le fait que** l'élément fonctionnel (5) est un élément fonctionnel à cristaux liquides dispersés dans un polymère (PDLC), que la zone (6a) de la première couche thermoplastique et/ou la zone de la deuxième couche thermoplastique (7), est/sont teintée(s) ou colorée(s), et que l'élément fonctionnel (5) présente un scellement de bord (10) qui est formé par un adhésif incolore transparent ou un ruban adhésif incolore transparent.

2. - Pare-brise selon la revendication 1, dans lequel la couche intermédiaire (3) est transparente dans le champ de vision central (B).

3. - Pare-brise selon l'une des revendications 1 ou 2, dans lequel la zone teintée ou colorée (6a) de la couche thermoplastique (6, 7) présente une transmission dans le domaine spectral visible de 10 % à 50 %, de préférence de 20 % à 40 %.

4. - Pare-brise selon l'une des revendications 1 à 3, dans lequel l'élément fonctionnel (5) est entouré de façon périphérique par une troisième couche thermoplastique (8) .

5. - Pare-brise selon la revendication 4, dans lequel le bord inférieur de l'élément fonctionnel (5) est disposé en affleurement avec la troisième couche thermoplastique (8).

6. - Pare-brise selon l'une des revendications 1 à 5, dans lequel le bord supérieur et les bords latéraux de l'élément fonctionnel (5) sont cachés en vision à travers par une impression de masquage opaque (9).

7. - Pare-brise selon l'une des revendications 1 à 6, dans lequel la première couche thermoplastique (6) et la deuxième couche thermoplastique (7) contiennent au moins du poly(vinyl butyral), de l'éthylène-acétate de vinyle (EVA) et/ou du polyuréthane (PU), de préférence du poly(vinyl butyral) (PVB).

8. - Pare-brise selon l'une des revendications 1 à 7, dans lequel la zone (6a) teintée ou colorée de la première couche thermoplastique (6) ou de la deuxième couche thermoplastique (7) dépasse du bord inférieur de l'élément fonctionnel (5).

9. - Véhicule équipé d'un pare-brise selon l'une des revendications 1 à 8, lequel ne présente pas de pare-soleil rabattable mécaniquement, monté sur le toit.

10. - Procédé de fabrication d'un pare-brise avec un pare-soleil (4) réglable électriquement selon l'une des revendications 1 à 9, dans lequel au moins
a) une vitre extérieure (1), une première couche thermoplastique (6), un élément fonctionnel (5) ayant des propriétés optiques réglables électriquement, une deuxième couche thermoplastique (7) et une vitre intérieure (2) sont disposés l'un au-dessus de l'autre dans cet ordre, l'élément fonctionnel (5) étant disposé dans une zone au-dessus d'un champ de vision central (B) et la première couche thermoplastique (6) et/ou la deuxième couche thermoplastique (7) présentant une zone teintée ou colorée (6a), qui est disposée entre l'élément fonctionnel (5) et la vitre extérieure (1) ou la vitre intérieure (2), et l'élément fonctionnel (5) étant un élément fonctionnel à PDLC et un scellement de bord (10) qui est formé par un adhésif incolore transparent ou un ruban adhésif incolore transparent;
b) la vitre extérieure (1) et la vitre intérieure (2) sont assemblées par stratification, à l'occasion de quoi une couche intermédiaire (3) avec élément fonctionnel incorporé (5) est formée à partir de la première couche thermoplastique (6) et de la deuxième couche thermoplastique (7).

11. - Procédé selon la revendication 10, dans lequel l'élément fonctionnel (5) se présente sous la forme d'un film multicouches et est découpé à la dimension désirée à l'aide d'un laser.

12. - Utilisation d'une zone teintée ou colorée (6a) d'une couche thermoplastique (6,7) pour relier un élément fonctionnel (5) ayant des propriétés optiques réglables électriquement à une vitre extérieure (1) ou à une vitre intérieure (2) d'un pare-brise, l'élément fonctionnel (5) étant divisé par des lignes isolantes (16) en segments qui peuvent être commandés électriquement de façon séparée, et un pare-soleil (4) réglable électriquement étant réalisé par la zone teintée ou colorée (6a) de la couche thermoplastique (6,7) et l'élément fonctionnel (5), l'élément fonctionnel (5) étant un élément fonctionnel à PDLC et présentant un scellement de bord (10) qui est formé par un adhésif incolore transparent ou un ruban adhésif incolore transparent.
